# EUROPEAN PATENT APPLICATION

(11) **EP 2 800 222 A1**
(43) Date of publication of application: **05.11.2014**
(21) Application number: 12861948.3
(22) Date of filing: 25.12.2012
(51) Int. Cl.: H02J 3/00, B60L 11/18, H01M 10/44, H01M 10/48, H02J 7/00, H02J 7/02

(54) **VEHICLE CHARGING SYSTEM**

(30) Priority: 28.12.2011 JP 2011287384; 06.12.2012 JP 2012267071
(71) Applicant: Kabushiki Kaisha Toyota Jidoshokki, Kariya-shi, Aichi 448-8671 (JP)
(72) Inventor: KOYAMA, Takeshi, Kariya-shi Aichi 448-8671 (JP); IWATA, Yasuki, Kariya-shi Aichi 448-8671 (JP); ASANO, Toshiyuki, Nagakute-shi Aichi 480-1189 (JP); HAYASHI, Satoru, Nagakute-shi Aichi 480-1189 (JP)
(74) Representative: TBK
(86) International application number: PCT/JP2012/083476
(87) International publication number: WO 2013/099868

(57) **Abstract**

A vehicle charging system provided with a control unit 10 to control power supply for a plurality of vehicle chargers connected to a respective plurality of vehicles, the system includes: a connection detection section detecting connection of the vehicle; a charge suppression section carrying out temporary charge suppression to an already connected vehicle in response to detection of a new vehicle by the connection detection section; a new vehicle charging current measurement section carrying out measurement of a charging current that flows in the new vehicle by carrying out temporary test current application to the new vehicle after charge suppression of the already connected vehicle; and a new vehicle charge availability decision section deciding availability of continuous charging to the new vehicle using the charging current value that flows in the new vehicle measured in the new vehicle charging current measurement section.

## Description

### TECHNICAL FIELD

The present invention relates to a vehicle charging system that is provided with a plurality of vehicle chargers and charges a plurality of vehicles simultaneously.

### BACKGROUND OF THE INVENTION

With the widespread of vehicles, such as electric vehicles, there is increasing demand for a vehicle charging system that is installed in, for example, a parking garage of housing complex and the like and capable of simultaneously charging a plurality of vehicles.

Since there is a problem that the electric usage exceeds the contract demand when a plurality of vehicles are connected to vehicle chargers for simultaneous charging, a technique is disclosed as a technique to avoid the problem in which a maximum usable current value is preset in a vehicle charging system and one or a plurality of vehicles are selected within the allowance and sequentially charged (Patent Document 1).

In a vehicle charging system that is capable of simultaneously charging a plurality of vehicles, the number of vehicles available for simultaneous charging is determined by dividing a maximum usable current value assigned to the vehicle charging system by an assumed charging current value that is assumed to flow per vehicle.

However, since a charging current that actually flows in each vehicle connected to the vehicle charger differs depending on the vehicle type, in a conventional vehicle charging system where an assumed charging current value is defined uniformly in determining the number of chargeable vehicles, there used to be a problem of inefficiency that charging for the number of vehicles below the number of originally chargeable vehicles is carried out when the assumed charging current value is set too high. In contrast, there used to be a problem of a risk that the contract demand of a power board is exceeded when the assumed charging current value is set too low.

### PRIOR ART DOCUMENT

### Patent Document

Patent Document 1: JP 2001-69678A

### BRIEF SUMMARY OF THE INVENTION

It is an object of the present invention is to solve the above problems and to provide, in a vehicle charging system provided with a control unit to control power supply for a plurality of vehicle chargers connected to a respective plurality of vehicles, a system capable of charging a maximum number of currently chargeable vehicles efficiently and also without exceeding a contract demand of a power board.

A vehicle charging system according to an aspect of the present invention is a vehicle charging system provided with a control unit to control power supply for a plurality of vehicle chargers connected to a respective plurality of vehicles, the system including: a connection detection section detecting connection of the vehicle; a charge suppression section carrying out temporary charge suppression to an already connected vehicle in response to detection of a new vehicle by the connection detection section; a new vehicle charging current measurement section carrying out measurement of a charging current that flows in the new vehicle by carrying out temporary test current application to the new vehicle after charge suppression of the already connected vehicle; and a new vehicle charge availability decision section deciding availability of continuous charging to the new vehicle using the charging current value that flows in the new vehicle measured in the new vehicle charging current measurement section.

### BRIEF DESCRIPTION OF THE SEVERAL VIEWS OF DRAWING

Fig. 1 is an overall illustration of a vehicle charging system of the present invention.
Fig. 2 is an overall illustration of a vehicle charging system in a first embodiment.
Fig. 3 is a flowchart of a vehicle charging system in a first embodiment.
Fig. 4 is a flowchart of a vehicle charging system in the first embodiment.
Fig. 5 is a block diagram of a vehicle charger and a vehicle connected to the vehicle charger.
Fig. 6 is a graph illustrating change in potential at point A in Fig. 4.
Fig. 7 is an example of the first embodiment.
Fig. 8 is an overall illustration of a vehicle charging system in a second embodiment.
Fig. 9 is a flowchart of a vehicle charging system in the second embodiment.
Fig. 10 is a flowchart of a vehicle charging system in the second embodiment.
Fig. 11 is an overall illustration of a vehicle charging system in a third embodiment.
Fig. 12 is a flowchart of a vehicle charging system in the third embodiment.
Fig. 13 is a flowchart of a vehicle charging system in the third embodiment.
Fig. 14 is a flowchart illustrating a flow of mode decision.
Fig. 15 is an overall illustration of a vehicle charging system in a fourth embodiment.
Fig. 16 is a flowchart of a vehicle charging system in the fourth embodiment.
Fig. 17 is an overall illustration of a vehicle charging system in a fifth embodiment.
Fig. 18 is a flowchart of a vehicle charging system in the fifth embodiment.
Fig. 19 is a flowchart of a vehicle charging system in the fifth embodiment.

### DETAILED DESCRIPTION OF THE INVENTION

### Overall Description

A vehicle charging system according to a first aspect of the present invention is a vehicle charging system provided with a control unit to control power supply for a plurality of vehicle chargers connected to a respective plurality of vehicles, the system including: a connection detection section detecting connection of the vehicle; a charge suppression section carrying out temporary charge suppression to an already connected vehicle in response to detection of a new vehicle by the connection detection section; a new vehicle charging current measurement section carrying out measurement of a charging current that flows in the new vehicle by carrying out temporary test current application to the new vehicle after charge suppression of the already connected vehicle; and a new vehicle charge availability decision section deciding availability of continuous charging to the new vehicle using the charging current value that flows in the new vehicle measured in the new vehicle charging current measurement section.

The vehicle charging system according to a second aspect of the present invention has, in the vehicle charging system of the first aspect, a charge suppression decision section deciding necessity of the charge suppression to the already connected vehicle prior to the temporary test current application to the new vehicle.

In the vehicle charging system according to the third aspect of the present invention, in the vehicle charging system of the second aspect, the charge suppression decision section decides the necessity of the charge suppression to the already connected vehicle using a contract demand value of a power board.

In the vehicle charging system according to the fourth aspect of the present invention, in the vehicle charging system of the second aspect, the charge suppression decision section decides the necessity of the charge suppression to the already connected vehicle using a tolerance defined at a value lower than a contract demand value of a power board.

In the vehicle charging system according to the fifth aspect of the present invention, in the vehicle charging system of the first aspect, the new vehicle charge availability decision section decides the availability of the continuous charging to the new vehicle using a tolerance defined at a value lower than a contract demand value of a power board.

In the vehicle charging system according to the sixth aspect of the present invention, in the vehicle charging system of the second aspect, the new vehicle charge availability decision section decides the availability of the continuous charging to the new vehicle using a tolerance defined at a value lower than a contract demand value of a power board.

The vehicle charging system according to the seventh aspect of the present invention has, in the vehicle charging system of the first aspect, a charge suppression release section releasing the charge suppression to the already connected vehicle.

The vehicle charging system according to the eighth aspect of the present invention, in the vehicle charging system of the first aspect, has: a control type vehicle charge control section carrying out charge control for a control type vehicle by potential of a charge control signal; a general type vehicle charge control section carrying out closed circuit control of a charging path by a pressing operation of a closed circuit operation button; and a mode decision section deciding a type of connected vehicle, wherein the mode decision section carries out closed circuit control of the charging path on an assumption of connection of a general type vehicle in a case that a charge control signal indicates a predetermined voltage when the closed circuit operation button is pressed, and confirms the type of the connected vehicle based on the charging current that flows in the charging path after circuit closing.

### Effects of the Invention

According to the present invention, relating to a vehicle charging system provided with a control unit to control power supply for a plurality of vehicle chargers connected to a respective plurality of vehicles, the system includes: a connection detection section detecting connection of the vehicle; a charge suppression section carrying out temporary charge suppression to an already connected vehicle in response to detection of a new vehicle by the connection detection section; a new vehicle charging current measurement section carrying out measurement of a charging current that flows in the new vehicle by carrying out temporary test current application to the new vehicle after charge suppression of the already connected vehicle; and a new vehicle charge availability decision section deciding availability of continuous charging to the new vehicle using the charging current value that flows in the new vehicle measured in the new vehicle charging current measurement section, thereby actually measuring the charging current that actually flows in a new vehicle when the new vehicle is newly connected to the vehicle charging system by carrying out temporary test current application to the new vehicle, which allows determination of charge availability of the new vehicle based on the actually measured value, so that it is possible to efficiently charge for a maximum number of currently chargeable vehicles without exceeding the contract demand of the power board.

### Description of Illustrated Embodiments

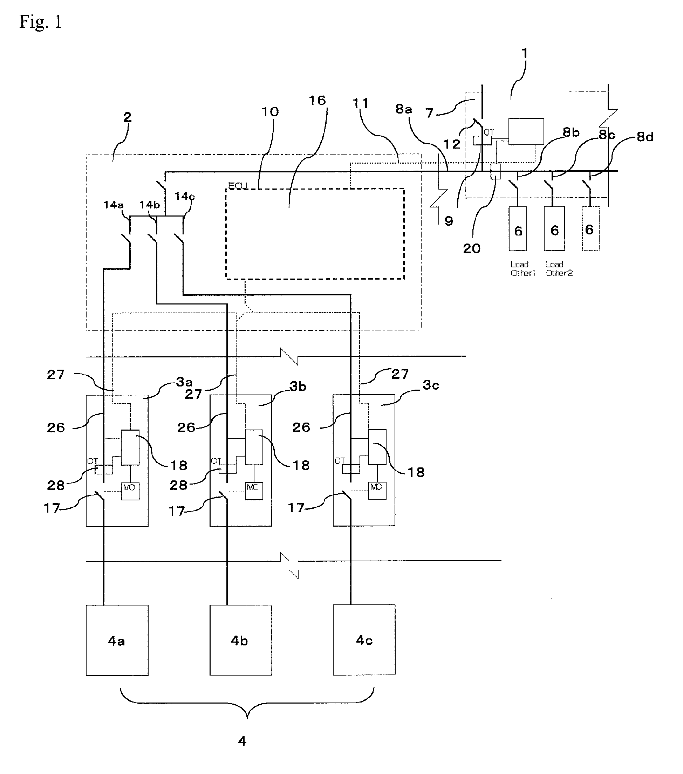

The present invention is a vehicle charging system that simultaneously supplies power supplied from a power board via a plurality of vehicle chargers to a plurality of vehicles for charging, and is best suited for use in, for example, housing complex and the like. Fig. 1 illustrates an overall illustration of the vehicle charging system.

In a standard system related to a vehicle provided with an on-board battery, Mode 1 and Mode 2 are set as types of vehicle. A Mode 1 vehicle is a general type vehicle that starts charging as soon as a power source is supplied by being connected to a charging connector of a vehicle charger.

In contrast, a Mode 2 vehicle is a control type vehicle that is provided with a charge control circuit on the vehicle side. In a case of the Mode 2 vehicle, a charge control signal (CPLT signal) is sent from a vehicle charger when a charging connector of the vehicle charger is connected to a charging port on the vehicle side and the charge control circuit on the vehicle side receiving the signal changes the voltage and the like, thereby transmitting the connection state to the vehicle charger, then charging starts after exchange of such signals.

In Fig. 1, 1 denotes a power board, 2 denotes a charging distribution board, 3a through 3c denote vehicle chargers, 4a through 4c denote vehicles, and 6 denotes a general load (loads in each household and a shared space of housing complex).

A main bus bar 7 is led in the power board 1, branch lines 8a through 8d branched from the main bus bar 7 are led out of the power board 1, and the charging distribution board 2 is connected to the branch lines 8a.

The power board 1 is provided therein with a CT9 to measure a full load current of the power board 1 and a CT20 to measure a general load current A that is a combined value of currents flowing in the general loads 6. Measurement results of the CT9 and CT20 are transmitted to a control unit 10 of the charging distribution board 2 via a signal line 11. The control unit 10 is to control power to each vehicle charger as described later.

In the present embodiment, the branch line 8a branched from the main bus bar 7 of the power board 1 is led in the charging distribution board 2 to carry out power supply for the plurality of vehicle chargers 3a through 3c via power supply lines 14a through 14c that are further branched from the branch line 8a, while the vehicle chargers 3a through 3c may also be directly connected to the power board 1. The control unit 10 built in the charging distribution board 2 may also be installed in the power board 1 and may also be equipped in any of the vehicle chargers. In a case of connecting the vehicle chargers 3a through 3c directly to the power board 1, it is also assumed that no general load 6 exists.

Each of the vehicle chargers 3a through 3c is provided with a charge control section 18 having a CPLT circuit to generate a charge control signal (CPLT signal) to the vehicles 4a through 4c built therein and a relay 17 to open and close a charging path 26 as well as a CT28 to measure a charging current that flows in the charging path 26. The current measured in the CT28 is transmitted to the control unit 10 via a signal line 27. The CPLT circuit oscillates a CPLT signal at a predetermined duty ratio as an initial value. The initial value of the duty ratio of a CPLT signal is predetermined by capacity of the power supply line 14, type of charging cable 3, and the like. The duty ratio of the CPLT signal is changeable with a pulse width change section (not shown) of the charge control section 18 by a command of the control unit 10. A greater duty ratio means that it is possible to supply a greater charging current.

First through fifth embodiments are described below as preferred embodiments of the present invention.

In the descriptions herein, the terms of A through G mean the respective values below.

A: a general load current (a current used for loads other than vehicles), B: a total charging current (a total value of charging currents of already connected vehicles), C: a contract demand (a contract demand of a power board), D: an assumed charging current value (a charging current that is assumed for a new vehicle and is defined for each vehicle charger in advance or uniformly defined for all vehicle chargers), E: a charging current (an actual charging current (maximum value) of a new vehicle), F: a tolerance (a value that is lower by a predetermined ratio than the contract demand C (for example, 80% of C)), G: a charge maintenance current (a minimum charging current, and it is not possible to charge at a current less than that (proper value for each vehicle type)), A + B: a full load current (total of working currents of the power board), and F - (A + B): an allowable current value (a current value available for power supply to a new vehicle).

A contract demand in the present invention includes currents in a predetermined range not to cut off the electricity even when a limiter of a distribution board or a contract breaker exceeds a default value. Further, the current in the predetermined range may also be corrected by the control unit 10 depending on the ambient temperature.

### (First Embodiment)

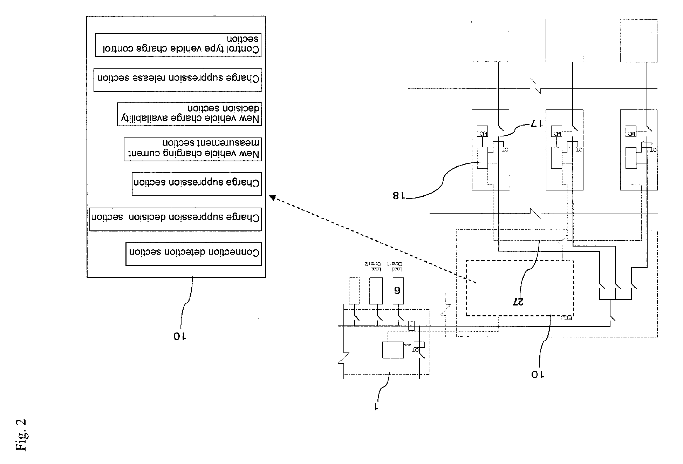

A vehicle charging system in a first embodiment has the control unit 10 provided with the following sections (a connection detection section, a charge suppression decision section, a charge suppression section, a new vehicle charging current measurement section, a new vehicle charge availability decision section, a charge suppression release section, and a control type vehicle charge control section) as illustrated in Fig. 2.

### (Connection Detection Section)

This section detects connection of a vehicle which is new (new vehicle). When a new vehicle of a Mode 2 type is connected to the vehicle charger 3, a connection detection section of the charge control section 18 detects the connection of a new vehicle by potential of the CPLT signal and transmits the connection of a new vehicle to the control unit 10 by a communication section (signal line 27). The connection of a vehicle may also be confirmed by directly communicating with the vehicle not via a CPLT signal.

### (Charge Suppression Decision Section)

In a charge suppression decision section, suppression decision of the following three patterns is carried out.

### Suppression Decision 1:

The charge suppression decision section firstly obtains a total value of a charging current (assumed charging current value D) that is assumed to be necessary in charging a new vehicle and the full load current (A + B) that is supplied to already connected vehicles and the general loads 6 that are connected to the power board 1 immediately after connection of a new vehicle to carry out comparison of the total value with the tolerance F that is allowed to be continuously used within a range of the contract demand value C of the power board 1 (in the present embodiment, a value defined in the interior wiring regulations, which are commercial standards in Japan, and a value calculated as "F = Contract Demand Value C x 80%").

In a case of (A + B) + D < F, decision is made as "being capable of immediate continuous charging for a new vehicle" without carrying out charge suppression to the already connected vehicles.

In a case of (A + B) + D > F, decision is made as "being not capable of immediate continuous charging for a new vehicle".

### Suppression Decision 2:

When the decision is made as "being not capable of immediate continuous charging for a new vehicle" in Suppression Decision 1, temporary test current application is carried out to the new vehicle to measure the charging current value E that flows in the new vehicle. In Suppression Decision 2, before the temporary test current application to the new vehicle, decision is made whether or not charge suppression to the already connected vehicles is necessary.

As mentioned above, in the interior wiring regulations, which are commercial standards in Japan, "Tolerance F = Contract Demand Value C x 80%" is defined as a value allowed to flow a current continuously over a long period of time for wiring protection of a branch circuit, and while continuous charging for a new vehicle has to be carried out in a range that a total value of a charging current of a new vehicle, the total charging current B of the already connected vehicles, and the general load current A do not exceed the tolerance F, the test current application may be carried out in a range of not exceeding the contract demand C because it finishes for a short period of time, that is approximately several minutes. Accordingly, in Suppression Decision 2, comparison of (A + B) + D with the contract demand value C of the power board 1 is carried out.

In a case of (A + B) + D < C, decision is made as being capable of immediate test current application to a new vehicle without carrying out charge suppression to the already connected vehicles.

In a case of (A + B) + D > C, decision is made as charge suppression to the already connected vehicles is necessary prior to test current application to the new vehicle.

### Suppression Decision 3:

When the charging current to the already connected vehicles is suppressed by Charge Suppression 1 in the charge suppression section mentioned below, availability of temporary test current application to a new vehicle is decided again after suppression of a charging current to the already connected vehicles.

In Suppression Decision 3, similar to Suppression Decision 2, comparison of (A + B) + D with the contract demand value C of the power board 1 is carried out.

In a case of (A + B) + D < C, decision is made as being capable of test current application to the new vehicle.

In a case of (A + B) + D > C, decision is made as not being capable of test current application to the new vehicle.

### (Charge Suppression Section)

In the charge suppression section, charge suppression of the following three patterns is carried out.

### Charge Suppression 1:

In Suppression Decision 2 above, when the decision is made as charge suppression to the already connected vehicles is necessary prior to test current application to the new vehicle (a case of (A + B) + D > C), charge suppression to the already connected vehicles is carried out prior to test current application to the new vehicle. Specifically, the control unit 10 outputs a charge suppression command to a vehicle charger decided as charge suppression is necessary, via the signal line 27. The vehicle charger that receives the charge suppression command changes the duty ratio of the CPLT signal in the charge control section 18 to suppress the charging current to the already connected vehicles.

### Charge Suppression 2:

At the time of test current application to a new vehicle, as well as measurement of the charging current value E of the new vehicle, confirmation of whether or not the new vehicle changes the charging current is also carried out following the change of the duty ratio of the CPLT signal. Further, calculation of the charge maintenance current value G that is a minimum current value to be necessary for charge maintenance of the new vehicle is also carried out.

When the new vehicle is a vehicle that changes the charging current following change of the duty ratio of the CPLT signal, the charging current to the new vehicle is suppressed to the charge maintenance current value G.

### Charge Suppression 3:

In a case of being insufficient even when the charging current to the new vehicle is suppressed by Charge Suppression 2 or in a case that the new vehicle is determined as a vehicle not being capable of changing the charging current following change of the duty ratio of the CPLT signal at the time of test current application, charge suppression to the already connected vehicles is carried out prior to continuous charging for the new vehicle.

### (New Charging Current Measurement Section)

Temporary test current application is carried out to the new vehicle after charge suppression to the already connected vehicles is performed by Charge Suppression 1 and the charging current value E (maximum charging current) for a predetermined period of time is measured.

Current measurement of the charging current is carried out in the CT28 of the vehicle charger and is transmitted to the control unit 10 via the signal line 27. On this occasion, confirmation of whether or not the new vehicle changes the charging current following change of the duty ratio of the CPLT signal is also carried out. Further, calculation of the charge maintenance current value G, which is a minimum current value necessary for charge maintenance of the new vehicle, is also carried out.

### (New Vehicle Charge Availability Decision Section)

Based on the charging current measured by the new charging current measurement section, a decision whether or not it is possible to continuously charge the new vehicle in addition to the already connected vehicles is made. The decision is made by comparing, for example, (A + B) + G with the tolerance F, and
in a case of (A + B) + G < F, decision is made as being capable of continuous charging to the new vehicle.

In a case of (A + B) + G > F, decision is made as not being capable of continuous charging to the new vehicle.

When the decision is made as not being capable of continuous charging to the new vehicle, a standby command for charging of the new vehicle is carried out to the vehicle charger.

It should be noted that the charging current of the new vehicle is not necessarily limited to G and may also be a value obtained by equally dividing an amount of available current by the number of connected vehicles.

### (Charge Suppression Release Section)

Release of charge suppression is carried out to the already connected vehicles after availability decision by the charge suppression decision section or after availability decision by the new vehicle charge availability decision section. In release of charge suppression, the control unit 10 outputs a suppression release command to the vehicle charger to release charge suppression via the signal line 27. The vehicle charger that receives the release suppression command changes the duty ratio of the CPLT signal to the value before suppression in the charge control section 18.

### (Control Type Vehicle Charge Control Section)

Charge control for a Mode 2 vehicle is carried out by the potential of the CPLT signal. That is, when the CPLT signal reaches predetermined potential after the Mode 2 vehicle is connected to the vehicle charger, the relay 17 is subjected to closed circuit control in the charge control section 18.

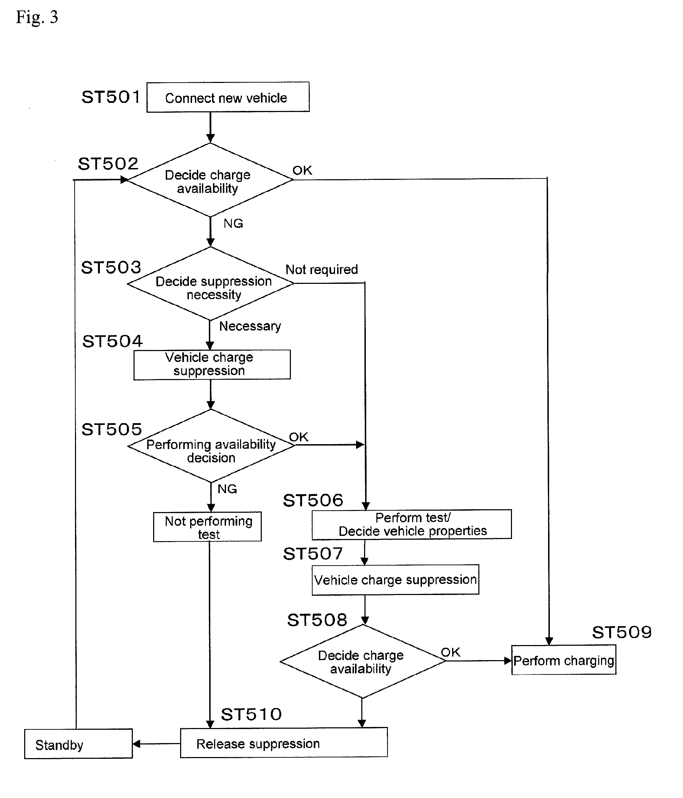

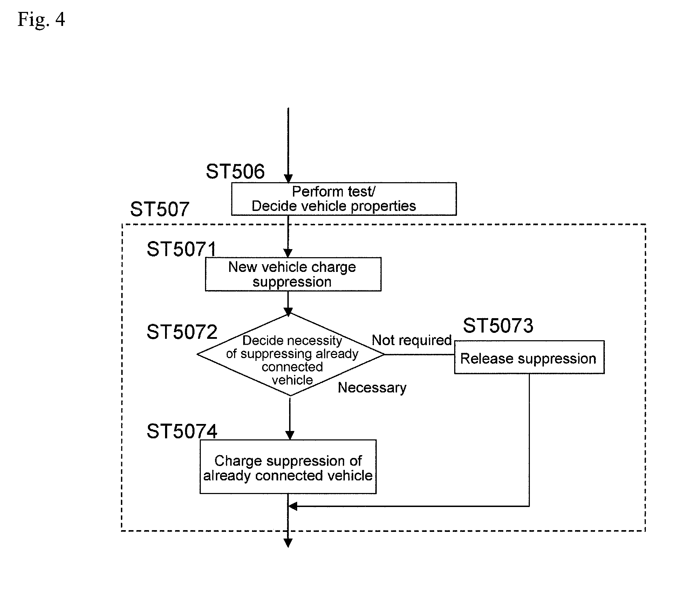

Descriptions are given below in accordance with flows in Figs. 3 through 4 in a case that, in a system illustrated in Fig. 2, when the vehicles 4 and 4b are charged by the respective vehicle chargers 3a and 3b, a new vehicle 4c is newly connected to the vehicle charger 3c. The power supply for the vehicle chargers 3a through 3c is carried out via the power supply lines 14a through 14c that are obtained by leading the branch line 8a branched from the main bus bar 7 of the power board 1 in the charging distribution board 2 and further branching the branch line 8a.

### (ST501)

When the new vehicle 4c is connected to the vehicle charger 3c, the connection detection section equipped in the charge control section 18 of the vehicle charger 3c detects the connection of a Mode 2 vehicle by the potential of the CPLT signal and transmits connection of the new vehicle 4c from the vehicle charger 3c to the control unit 10 by the communication section (signal line 27). It is also possible to detect the connection by directly communicating with the vehicle.

### (ST502)

When the connection of the new vehicle 4c is detected, the control unit 10 refers to the charging current measured by the CT28 in each of the vehicle chargers 3a and 3b to which the already connected vehicles 4a and 4b are connected. That is, the charging current of each of the vehicle chargers 3a and 3b is transmitted to the control unit 10, and in the control unit 10, the total charging current B which is a combined value of the charging currents used for charging of the already connected vehicles 4a and 4b at the present time, is calculated based on the charging current data.

The control unit 10 calculates, referring to the general load current A supplied from the power board 1 to the general loads 6, a combined value of A and B as the full load current (A + B) while retaining the contract demand C of the power board 1, the tolerance F that is allowed to be continuously used within a range of the contract demand value C of the power board 1 (in the present embodiment, a value defined as a value allowed to flow a current continuously over a long period of time for wiring protection of a branch circuit in the interior wiring regulations, which are commercial standards in Japan, and a value calculated as "F = Contract Demand Value C x 80%"), and a charging current that is assumed to be necessary in charging the new vehicle 4c (assumed charging current value D).

In ST502, Suppression Decision 1 in the charge suppression decision section is carried out.

### Suppression Decision 1:

The charge suppression decision section firstly obtains a total value of a charging current (assumed charging current value D) that is assumed to be necessary in charging a new vehicle and the full load current (A + B) that is supplied to already connected vehicles and the general loads 6 that are connected to the power board 1 immediately after connection of a new vehicle and carries out comparison of the total value with the tolerance F that is allowed to be continuously used within a range of the contract demand value C of the power board 1 (in the present embodiment, a value defined in the interior wiring regulations, which are commercial standards in Japan, and a value calculated as "F = Contract Demand Value C x 80%"). In a case of (A + B) + D < F, decision is made as being capable of immediate continuous charging for a new vehicle without carrying out charge suppression to the already connected vehicles. In a case of (A + B) + D > F, decision is made as being not capable of immediate continuous charging for a new vehicle.

When the decision as "being capable of immediate continuous charging for a new vehicle" is made, a CPLT signal at a predetermined duty ratio as an initial value is oscillated in the CPLT circuit of the vehicle charger 3c connected to the new vehicle 4c to carry out confirmation of whether or not the new vehicle 4c is qualified for charging with the vehicle charger 3c. Charge control for a Mode 2 vehicle described later is carried out to a qualified vehicle to start charging.

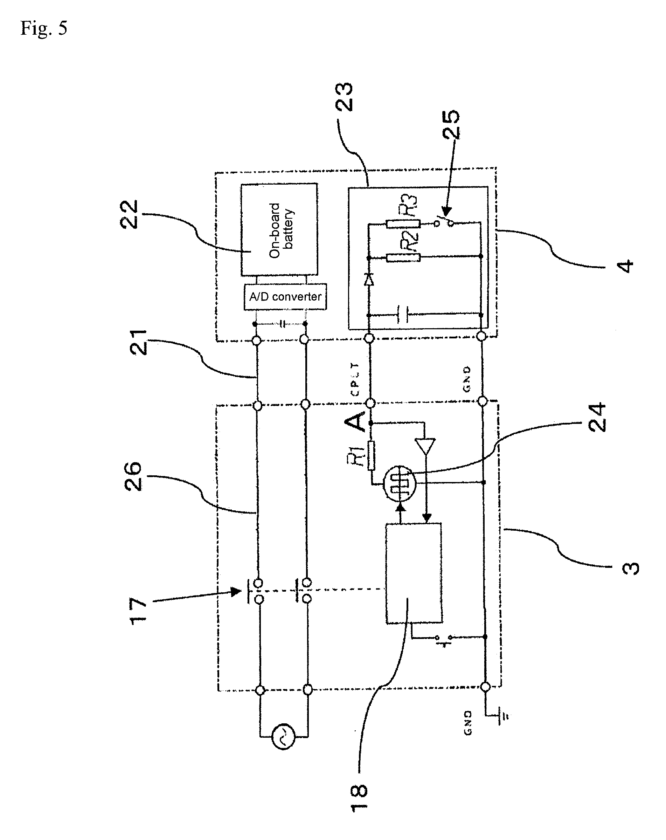

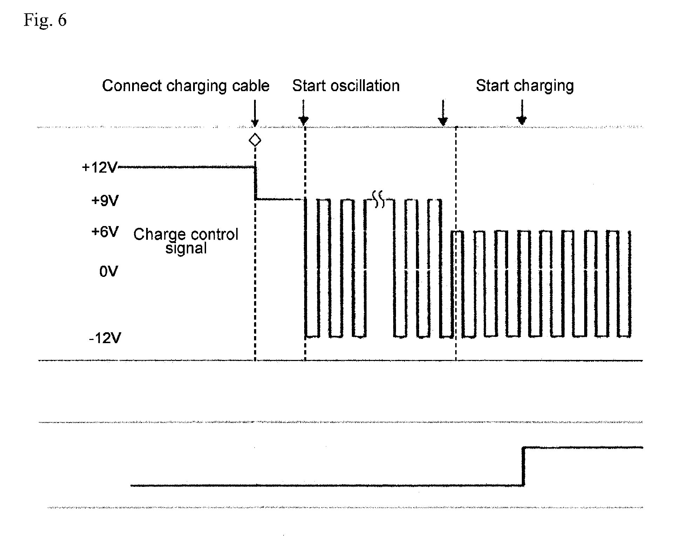

Fig. 5 illustrates a block diagram of a Mode 2 vehicle charger that corresponds to a Mode 2 vehicle 4, and Fig. 6 illustrates a graph showing change in potential at point A in Fig. 5 (potential of the CPLT signal) for each situation of charge control for a Mode 2 vehicle. In the block diagram of Fig. 5, in a state of not connecting a charging cable 21 to the vehicle 4, the potential of the CPLT signal of the vehicle charger 3 is designed to be 12 V. When the charging cable 21 is connected to the vehicle 4, a resistor R2 of a charge control circuit 23 on the vehicle side is connected to a resistor R1 in series and the potential of the CPLT signal becomes 9 V. When detecting that the potential of the CPLT signal becomes 9 V, the charge control section 18 senses that the charging cable 3 of the Mode 2 vehicle 4 is connected, and after that, the charge control section 18 oscillates a CPLT signal, so that the potential of the CPLT signal becomes in a state of 9 V oscillation. The pulsed 9 V CPLT signal thus enters the vehicle side, and the charge control circuit 23 on the vehicle side turns on a power reception permission switch 25. Here, when a lithium ion battery is mounted as an on-board battery 22, the potential of the CPLT signal changes to 6 V oscillation by a resistor R3, and the vehicle charger 3 recognizes that power reception preparation of the vehicle 4 is completed. The charge control section 18 outputs an "on" signal to the relay 17 in this state and conducts closed circuit control to the charging path 26, and applies a charge voltage of 200 V as power source supply to the on-board battery 22 to start charging (ST509).

### (ST503)

In contrast, when the decision as "being not capable of immediate continuous charging for a new vehicle" is made, Suppression Decision 2 in the charge suppression decision section is carried out subsequently.

### Suppression Decision 2:

When the decision is made as being not capable of immediate continuous charging for a new vehicle in Suppression Decision 1, temporary test current application is carried out to the new vehicle to measure the charging current value E that flows in the new vehicle. In Suppression Decision 2, before the temporary test current application to the new vehicle, decision whether or not charge suppression to the already connected vehicles is necessary is made.

As mentioned above, in the interior wiring regulations, which are commercial standards in Japan, "Tolerance F = Contract Demand Value C x 80%" is defined as a value allowed to flow a current continuously over a long period of time for wiring protection of a branch circuit, and while continuous charging for a new vehicle has to be carried out in a range that a total value of a charging current of a new vehicle, the total charging current B of the already connected vehicles, and the general load current A do not exceed the tolerance F, the test current application may be carried out in a range of not exceeding the contract demand C because it finishes for a short period of time such as approximately several minutes.

Accordingly, in Suppression Decision 2, comparison of (A + B) + D with the contract demand value C of the power board 1 is carried out.

In a case of (A + B) + D < C, decision is made as being capable of immediate test current application to a new vehicle without carrying out charge suppression to the already connected vehicles.

In a case of (A + B) + D > C, decision is made as not being capable of immediate test current application to a new vehicle.

### (ST504)

When the decision is made as not being capable of immediate test current application to a new vehicle in Suppression Decision 2 above, Charge Suppression 1 in the charge suppression section is carried out.

### Charge Suppression 1:

The control unit 10 outputs a charge suppression command to a vehicle charger decided as charge suppression is necessary via the signal line 27. The vehicle charger that receives the charge suppression command changes the duty ratio of the CPLT signal in the charge control section 18 to suppress the charging current to the already connected vehicles.

In the control unit 10, a method of charge suppression to all or part of the already connected vehicles 4a and 4b is determined by the allowable current value (F - (A + B)). When the allowable current value is not more than a predetermined value (for example, a case of (F - (A + B)) ≤ D/2), charge suppression is performed uniformly to all of the already connected vehicles 4a and 4b (for example, to limit the charging current to 50% of the rated value). When the allowable current value is not less than the predetermined value (for example, a case of (F - (A + B)) > D/2), charge suppression is performed only to a particular vehicle out of the already connected vehicles 4a and 4b (for example, to decrease the charging current of a vehicle with a greater working current or a vehicle connected for a longer period of time to 50% of the rated value).

This method of charge suppression is not particularly limited, and charge suppression may also be conducted uniformly to the already connected vehicles at a fixed value and charge suppression may also be conducted only to a vehicle with greater integral power. The charge suppression is carried out in a range of securing the charge maintenance current of each vehicle.

### (ST505)

After the suppression of the charging current to the already connected vehicles, the charge suppression decision section again decides availability of temporary test current application to a new vehicle by Suppression Decision 3. Here, in a case of (A + B) + D > C again, the new vehicle receives a standby command for charging.

### (ST506)

When the decision is made as "being capable of performing temporary test current application" in ST503 or ST505, (the new charging current measurement section) carries out temporary test current application to the new vehicle to measure the charging current value E (maximum charging current) for a predetermined period of time. The current measurement of the charging current is carried out in the CT28 of the vehicle charger and transmitted to the control unit 10 via the signal line 27. On this occasion, confirmation of whether or not the new vehicle changes the charging current following change of the duty ratio of the CPLT signal is also carried out. Further, calculation of the charge maintenance current value G, which is a minimum current value necessary for charge maintenance of the new vehicle is also carried out.

Current measurement of the charging current is carried out in the CT28 of the vehicle charger and transmitted to the control unit 10 via the signal line 27.

### (ST507)

Subsequently, Charge Suppression 2 in the charge suppression section is carried out, and charge suppression to a new vehicle is performed such that the charging current of the new vehicle becomes the charge maintenance current value G of the new vehicle calculated in the above process (ST5071).

At this stage, the charging current to the already connected vehicles is sometimes suppressed temporarily by Charge Suppression 1 while, here, necessity of the charge suppression to the already connected vehicles is decided again (ST5072). When the decision is made as the charge suppression to the already connected vehicles is necessary, Charge Suppression 3 is performed by the charge suppression section (ST5074).

When the decision is made as the charge suppression to the already connected vehicles is not required, Charge Suppression 1 made by the charge suppression section is released (ST5073). In the release of charge suppression, the control unit 10 outputs a suppression release command to the vehicle charger to release charge suppression via the signal line 27. The vehicle charger that receives the release suppression command changes the duty ratio of the CPLT signal to the value before suppression of the duty ratio in the charge control section 18. It should be noted that the adjustment satisfies (A + B) < F.

In the control unit 10, a method of charge suppression to all or part of the already connected vehicles 4a and 4b is determined by the allowable current value (F - (A + B)). When the allowable current value is not more than a predetermined value (for example, a case of (F - (A + B)) ≤ D/2), charge suppression is performed uniformly to all of the already connected vehicles 4a and 4b (for example, to limit the charging current to 50% of the rated value). When the allowable current value is more than the predetermined value (for example, a case of (F - (A + B)) > D/2), charge suppression is performed only to a particular vehicle out of the already connected vehicles 4a and 4b (for example, to decrease the charging current of a vehicle with a greater working current or a vehicle connected for a longer period of time to 50% of the rated value).

This method of charge suppression is not particularly limited, and charge suppression may also be conducted uniformly to the already connected vehicles at a fixed value and charge suppression may also be conducted only to vehicles with greater integral power. The charge suppression is carried out in a range of securing the charge maintenance current of each vehicle.

The control unit 10 outputs a charge suppression command to the vehicle charger decided as charge suppression is necessary via the signal line 27. The vehicle charger that receives the charge suppression command changes the duty ratio of the CPLT signal in the charge control section 18 to suppress the charging current to the already connected vehicle.

### (ST508)

Subsequently, the new vehicle charge availability decision section decides whether or not it is possible to continuously charge the new vehicle. The new vehicle charge availability decision section decides whether or not it is possible to continuously charge the new vehicle in addition to the already connected vehicles based on the charging current measured by the new charging current measurement section. The decision is made by comparing (A + B) + G with the tolerance F, and in a case of (A + B) + G < F, decision is made as being capable of continuous charging to the new vehicle.

When the decision is made as not being capable of continuous charging to the new vehicle, a standby command for charging of the new vehicle is carried out to the vehicle charger.

The new vehicle 4c that receives the standby command for charging is subjected to Charge Suppression Decision 1 again after completion of charging the already connected vehicles 4a and 4b (ST502).

When the new vehicle becomes in a standby state to wait for charging, the charge suppression of the already connected vehicles is released (ST510). In the release of charge suppression, the control unit 10 outputs a suppression release command to the vehicle charger to release charge suppression via the signal line 27. The vehicle charger that receives the release suppression command changes the duty ratio of the CPLT signal to the value before suppression in the charge control section 18.

### Examples

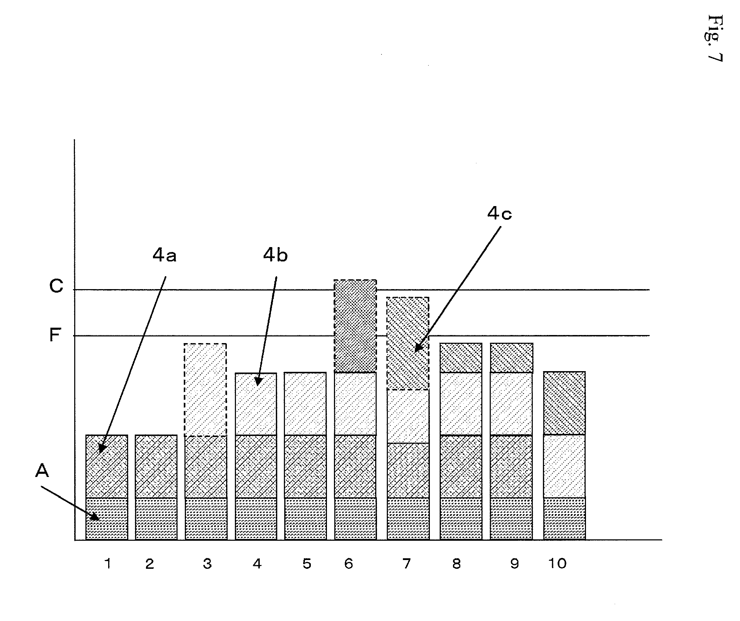

Descriptions are given below to examples to which the charging system in the present embodiment (First Embodiment) is applied when connecting three vehicles (vehicles 4a through 4c) for charging based on Fig. 7.

In the present example, the contract demand C of the power board 1 is 60 A and the tolerance F thereof is 48 A.

### State (1):

Only the vehicle 4a is charged. At this time, the charging current (B) of the vehicle 4a is 15 A, the general load current (A) is 10 A, and the full load current (A + B) is 25 A.

### State (2):

While charging the vehicle 4a, the vehicle 4b is newly connected. The assumed charging current value D of the vehicle 4b is registered as 22 A.

### State (3):

In accordance with above (ST502), Suppression Decision 1 in the (charge suppression decision section) is carried out for comparison of (A + B) + D with F. Here, since (A + B) + D = 25 + 22 = 47 A and F = 48 A, the (charge suppression decision section) makes decision as "being capable of immediate continuous charging for a new vehicle without carrying out charge suppression to the already connected vehicles".

### State (4):

By the above decision, immediate continuous charging to the vehicle 4b is started.

### State (5):

After the start of charging to the vehicle 4b, the actual charging current value E that flows in the vehicle 4b is measured. The charging current value E of the vehicle 4b is 15 A.

### State (6):

While charging the vehicles 4a and 4b, the vehicle 4c is newly connected. The assumed charging current value D of the vehicle 4c is registered as 22 A.

In accordance with above (ST502), Suppression Decision 1 in the (charge suppression decision section) is carried out for comparison of (A + B) + D with F. Here, since (A + B) + D = 62 A and F = 48 A, the (charge suppression decision section) makes decision as "being not capable of immediate continuous charging for a new vehicle".

Subsequently, in accordance with above (ST503), Suppression Decision 2 in the charge suppression decision section is carried out for comparison of (A + B) + D with C. Here, since (A + B) + D = 62 A and C = 60 A, the charge suppression decision section makes decision as "charge suppression to the already connected vehicles being necessary prior to test current application to a new vehicle".

### State (7):

In response to the above decision, Charge Suppression 1 in the charge suppression section is carried out. In the present example, suppression to be uniformly 13 A is carried out (ST504).

After that, Suppression Decision 2 in the charge suppression decision section carries out the comparison of (A + B) + D with C again. Here, since(A + B) + D = 58 A and C is 60 A, the charge suppression decision section carries out decision as "being capable of test current application to a new vehicle" (ST505).

In response to the above decision, the new charging current measurement section oscillates a CPLT signal at a predetermined duty ratio as an initial value in the CPLT circuit of the vehicle charger 3c connected to the new vehicle 4c to carry out temporary test current application to the new vehicle 4c and also carries out confirmation of whether or not the charging current is changed following change of the duty ratio of the CPLT signal. The new vehicle 4c is a vehicle that changes the charging current following change of the duty ratio.

That is, a voltage is temporarily applied for a predetermined period of time (for example, for one minute) by the new charging current measurement section to measure the actual charging current value E that flows in the new vehicle 4c (ST506). In addition, calculation of the charge maintenance current value G, which is a minimum current value necessary for charge maintenance of the new vehicle 4c, is also carried out. The charging current value E of the new vehicle 4c is 15 A and the charge maintenance current value G is 7 A.

### State (8):

After the charging current of the new vehicle 4c is suppressed at 7 A, necessity of continuing the charge suppression to the vehicles 4a and 4b is decided (ST5072). Even when the charge suppression to the vehicles 4a and 4b is released, the condition of G + (A + B) = 7 + 30 + 10 = 47 A < F is satisfied, so that determination is made as the charge suppression to the vehicles 4a and 4b is not required.

### State (9):

In a state of simultaneously charging three of the new vehicle 4c and the vehicles 4a and 4b that are subjected to release of charge suppression, the new vehicle charge availability decision section carries out decision of whether or not it is possible to continuously charge the new vehicle (ST508). Since the condition of G + (A + B) = 47 A < F is satisfied, the decision is made as being capable of continuous charging of the new vehicle.

### State (10):

Since charging of the vehicle 4a is fulfilled out of the vehicles 4a, 4b, and 4c, the charge suppression of the vehicle 4c is released and the charging current of the new vehicle 4c becomes 15 A.

As described above, the vehicle charging system in the first embodiment is a charging system dedicated for a Mode 2 vehicle and is to decide necessity of the charge suppression to the already connected vehicles using the contract demand value of the power board before temporary test current application. In addition, it is to decide availability of continuous charging to the new vehicle using the tolerance F defined to be a lower value than the contract demand value of the power board. When a Mode 1 vehicle is connected to the vehicle charging system in the first embodiment, the potential of the CPLT signal does not change and thus charging is not started.

### (Second Embodiment)

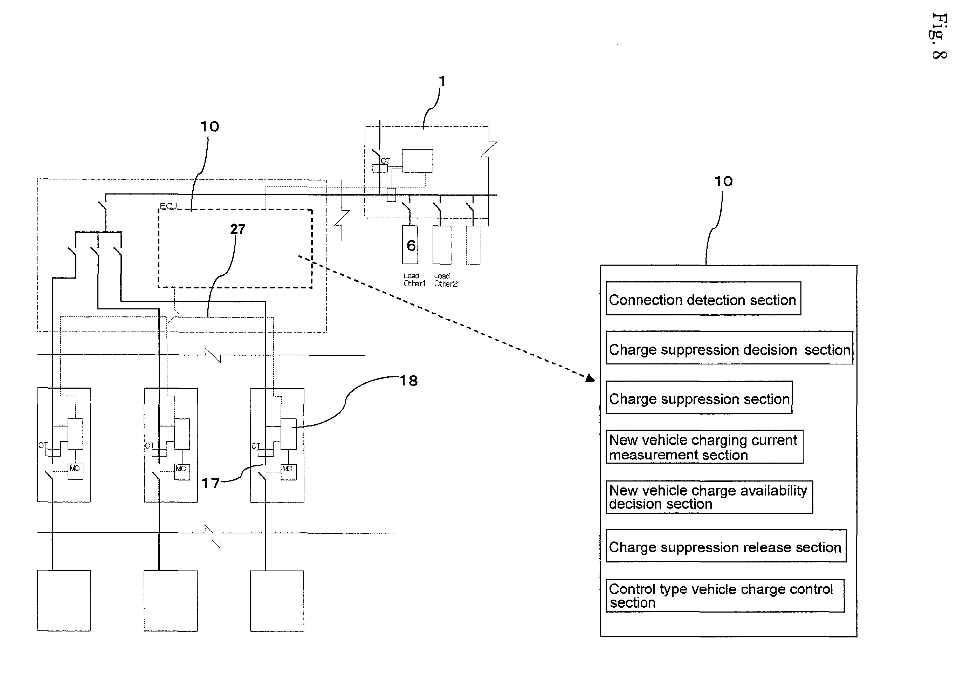

A vehicle charging system in the second embodiment is similar to the first embodiment in having the control unit 10 provided with, as illustrated in Fig. 8, the following sections (a connection detection section, a charge suppression decision section, a charge suppression section, a new vehicle charging current measurement section, a new vehicle charge availability decision section, a charge suppression release section, and a control type vehicle charge control section) and is different in that necessity of the charge suppression to the already connected vehicles before temporary test current application is decided using the tolerance F defined at a value lower than the contract demand value of the power board.

### (Connection Detection Section)

This section detects connection of a vehicle which is new (new vehicle). That is, regarding a Mode 2 vehicle, when a new vehicle is connected to the vehicle charger 3, a connection detection section of the charge control section 18 detects the connection of a new vehicle by potential of the CPLT signal and transmits the connection of a new vehicle to the control unit 10 by a communication section (signal line 27). The connection of a vehicle may also be confirmed by directly communicating with the vehicle not via a CPLT signal.

### (Charge Suppression Decision Section)

When connection of a new vehicle is detected by the connection detection section while charging the already connected vehicles and the charging current of the new vehicle is measured, decision whether or not temporary charge suppression to the already connected vehicles is necessary is made.
The charge suppression decision section calculates the allowable current value (F - (A + B)) that is allowed to be supplied to the new vehicle from a difference between the tolerance F that is allowed to be continuously used within a range of the contract demand value C (in the present embodiment, a value defined in the interior wiring regulations, which are commercial standards in Japan, and a value calculated as "F = Contract Demand Value C × 80%"), and the full load current (A + B) that is supplied to loads (vehicles 4 and general loads 6) including the vehicles at least connected to the branch lines 8a through 8d branched from the main bus bar 7 of the power board 1 to make decision based on the allowable current value.
When the vehicle charger is directly connected to the power board 1, the general load current A that corresponds to the general loads 6 does not exist.

### (Charge Suppression Section)

After the decision is made as temporary charge suppression to the already connected vehicles is necessary by the charge suppression decision section, charge suppression is performed to all or part of the already connected vehicles. That is, the control unit 10 outputs a charge suppression command to a vehicle charger decided as charge suppression is necessary via the signal line 27. The vehicle charger that receives the charge suppression command changes the duty ratio of the CPLT signal in the charge control section 18 to suppress the charging current to the already connected vehicles.

### (New Vehicle Charging Current Measurement Section)

After charge suppression to the already connected vehicles is performed by the charge suppression section, temporary charging to the new vehicle is carried out to measure the charging current for a predetermined period of time. The current measurement of the charging current is carried out in the CT28 of the vehicle charger and transmitted to the control unit 10 via the signal line 27.

### (New Vehicle Charge Availability Decision Section)

Based on the charging current measured by the new vehicle charging current measurement section, decision whether or not it is possible to charge the new vehicle in addition to the already connected vehicles is made. When it is not possible to charge the new vehicle as a result of the decision, a charge cancellation command to a new vehicle is carried out to the vehicle charger, and the vehicle charger that receives the charge cancellation command conducts open circuit control to the relay 17 to cancel charging of the new vehicle.

### (Charge Suppression Release Section)

After availability decision by the new vehicle charge availability decision section, charge suppression to the already connected vehicles to which temporary charge suppression is carried out, out of the already connected vehicles, is released. That is, the control unit 10 outputs a suppression release command to the vehicle charger to release the charge suppression via the signal line 27. The vehicle charger that receives the release suppression command resets the CPLT signal in the charge control section 18 and changes the duty ratio to the value before suppression.

### (Control Type Vehicle Charge Control Section)

Charge control for a Mode 2 vehicle is carried out by the potential of the CPLT signal. That is, when the CPLT signal reaches predetermined potential after the Mode 2 vehicle is connected to the vehicle charger, the relay 17 is subjected to closed circuit control in the charge control section 18.

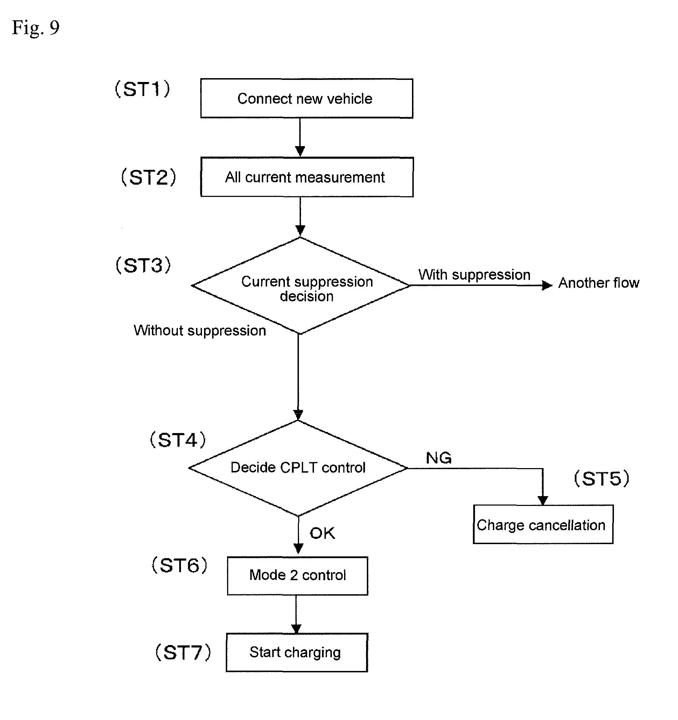

In a system illustrated in Fig. 8, descriptions are given below in accordance with flows in Figs. 9 through 10, to a case that when the vehicles 4 and 4b are charged by the respective vehicle chargers 3a and 3b, a new vehicle 4c is newly connected to the vehicle charger 3c.

The power supply for the plurality of vehicle chargers 3a through 3c is carried out via the power supply lines 14a through 14c that are obtained by leading the branch line 8a branched from the main bus bar 7 of the power board 1 in the charging distribution board 2 and further branching the branch line 8a.

### (ST1)

When the new vehicle 4c is connected to the vehicle charger 3c, the connection detection section equipped in the charge control section 18 of the vehicle charger 3c detects the connection of a Mode 2 vehicle by the potential of the CPLT signal and transmits connection of the new vehicle 4c from the vehicle charger 3c to the control unit 10 by the communication section (signal line 27).

### (ST2)

When the connection of the new vehicle 4c is detected, the control unit 10 refers to the charging current measured by the CT28 in each of the vehicle chargers 3a and 3b to which the already connected vehicles 4a and 4b are connected. That is, the charging current of each of the vehicle chargers 3a and 3b is transmitted to the control unit 10, and in the control unit 10, the total charging current B is calculated, which is a combined value of the charging currents used for charging of the already connected vehicles 4a and 4b at the present time, based on the charging current data. The control unit 10 calculates, referring to the general load current A supplied from the power board 1 to the general loads 6, a combined value of A and B as the full load current (A + B). Meanwhile, the control unit 10 retains the contract demand C of the power board 1 and the tolerance F that is allowed to be continuously used within a range of the contract demand value C (in the present embodiment, a value defined in the interior wiring regulations, which are commercial standards in Japan, and a value calculated as "F = Contract Demand Value C × 80%"), and the allowable current value (F - (A + B)) that is available for power supply to the new vehicle 4c is calculated from the difference of them. Here, in the control unit 10, the charging current that is assumed to be necessary in charging the new vehicle 4c (assumed charging current value D) is registered in advance. As the value of full load current (A + B), the current value measured in the CT9 may also be used.

### (ST3)

Subsequently, in the control unit 10, magnitudes of the allowable current value and the assumed charging current value D are contrasted.

When the allowable current value is greater than the assumed charging current value D in ST3, charging is permitted to the new vehicle 4c without carrying out charging limitation to all or part of the currently charged already connected vehicles 4a and 4b.

### (ST4, ST5, ST6, ST7)

Subsequently, in the CPLT circuit of the vehicle charger 3c connected to the new vehicle 4c, a CPLT signal at a predetermined duty ratio as an initial value is oscillated to carry out confirmation of whether or not the new vehicle 4c is a vehicle qualified for charging with the vehicle charger 3c (ST4). Specifically, when a charging current not less than that corresponding to the duty ratio flows in the new vehicle 4c, charging is not permitted as an unqualified vehicle (ST5). To a qualified vehicle, charge control for a Mode 2 vehicle similar to the first embodiment is carried out (ST6) to start charging (ST7).

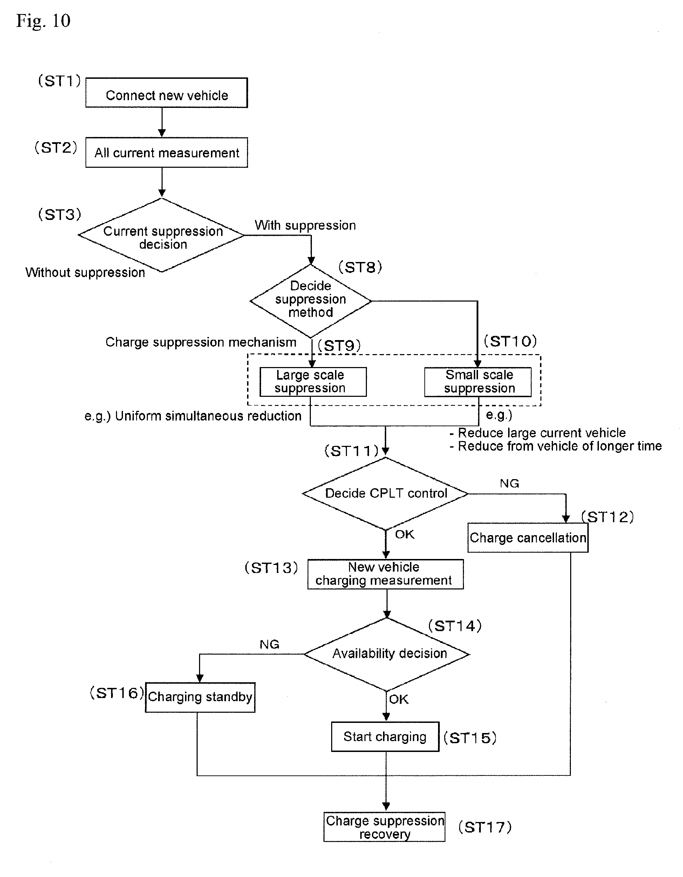

When the allowable current value is less than the assumed charging current value D in ST3, suppression (reduction) of the charging current is temporarily performed to the already connected vehicles 4a and 4b in accordance with the flow in Fig. 10.

### (ST8)

In the control unit 10, a method of charge suppression to all or part of the already connected vehicles 4a and 4b is determined by the allowable current value.

### (ST9)

When the allowable current value is not more than a predetermined value (for example, a case of (F - (A + B)) ≤ D/2), charge suppression is performed uniformly to all of the already connected vehicles 4a and 4b (for example, the charging current is limited to 50% of the rated value). After that, each charging current is referred again to confirm that the allowable current value is greater than the assumed charging current value D by the charge suppression of the already connected vehicles 4a and 4b.

### (ST10)

When the allowable current value is more than a predetermined value (for example, a case of (F - (A + B)) > D/2), charge suppression is performed only to a particular vehicle out of the already connected vehicles 4a (for example, to decrease the charging current of a vehicle with a greater working current or a vehicle connected for a long period of time to 50% of the rated value). After that, each charging current is referred again to confirm that the allowable current value is greater than the assumed charging current value D by charge suppression of the already connected vehicles 4a and 4b.

This method of charge suppression is not particularly limited, and charge suppression may also be conducted uniformly to the already connected vehicles at a fixed value and charge suppression may also be conducted only to a vehicle with greater integral power. The charge suppression is carried out in a range of securing the charge maintenance current of each vehicle.

### (ST11, ST12)

Subsequently, in the CPLT circuit of the vehicle charger 3c connected to the new vehicle 4c, a CPLT signal at a predetermined duty ratio as an initial value is oscillated to carry out confirmation of whether or not the new vehicle 4c is a vehicle qualified for charging with the vehicle charger 3c (ST11). Specifically, when a charging current not less than that corresponding to the duty ratio flows in the new vehicle 4c, charging is not permitted as an unqualified vehicle (ST12).

### (ST13)

To a qualified vehicle, a voltage is temporarily applied for a predetermined period of time (for example, for one minute) by the new vehicle charging current measurement section to measure the actual charging current E that flows in the new vehicle 4c.

### (ST14)

Subsequently, the actual charging current E that flows in the new vehicle 4c and the allowable current value (F - (A + B)) are contrasted by the new vehicle charge availability decision section, and charging is permitted when the allowable current value is greater than the actual charging current E (ST15). When the allowable current value is less than the actual charging current E, a standby command for charging is given (ST16). The new vehicle 4c that receives the standby command for charging is permitted to be charged after completion of charging the already connected vehicles 4a and 4b. After the charging is permitted to carry out Mode 2 control, the charging is started.

### (ST17)

The charge suppression to the already connected vehicles 4a and 4b performed in ST9 or ST10 is released regardless of the decision result after the decision by the new vehicle charge availability decision section in ST14, and the charging current recovers to the original level.

### (Third Embodiment)

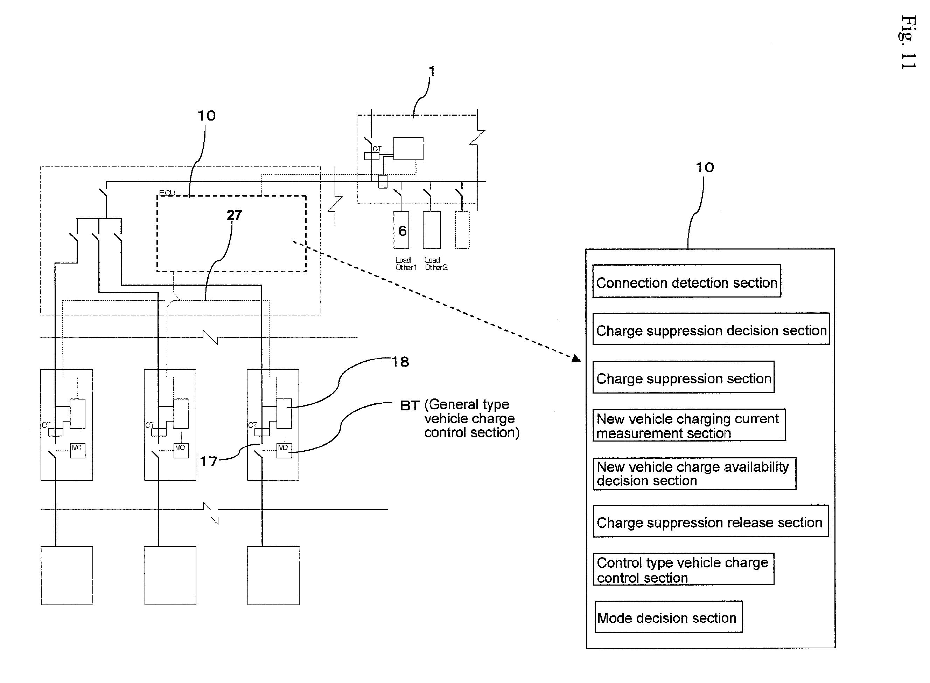

A vehicle charging system in the third embodiment is provided with, as illustrated in Fig. 11, the following sections (a connection detection section, a charge suppression decision section, a charge suppression section, a new vehicle charging current measurement section, a new vehicle charge availability decision section, a charge suppression release section, a control type vehicle charge control section, a general type vehicle charge control section, and a mode decision section).

Although the connection detection section, the charge suppression decision section, the charge suppression section, the new vehicle charging current measurement section, the new vehicle charge availability decision section, the charge suppression release section, and the control type vehicle charge control section are similar to the second embodiment, they are different in that the type of vehicle is distinguished by the following mechanisms to correspond to both a Mode 1 vehicle and a Mode 2 vehicle.

### (General Type Vehicle Charge Control Section)

By a pressing operation of a closed circuit operation button BT equipped in the vehicle charger, the relay 17 is actuated to carry out closed circuit control of the charging path 26.

### (Mode Decision Section)

This section decides the type of connected vehicles.

The mode decision section decides as a Mode 2 vehicle is connected to the vehicle charger by the situation that the potential of the CPLT signal becomes 9 V at the time of connection of the new vehicle. In addition, when the CPLT signal at the time of pressing the closed circuit operation button BT indicates a predetermined voltage, the charging path 26 is subjected to closed circuit control on the assumption that connection of a Mode 1 vehicle to confirm the type of connected vehicles based on the current that flows in the charging path 26 after closing the circuit.

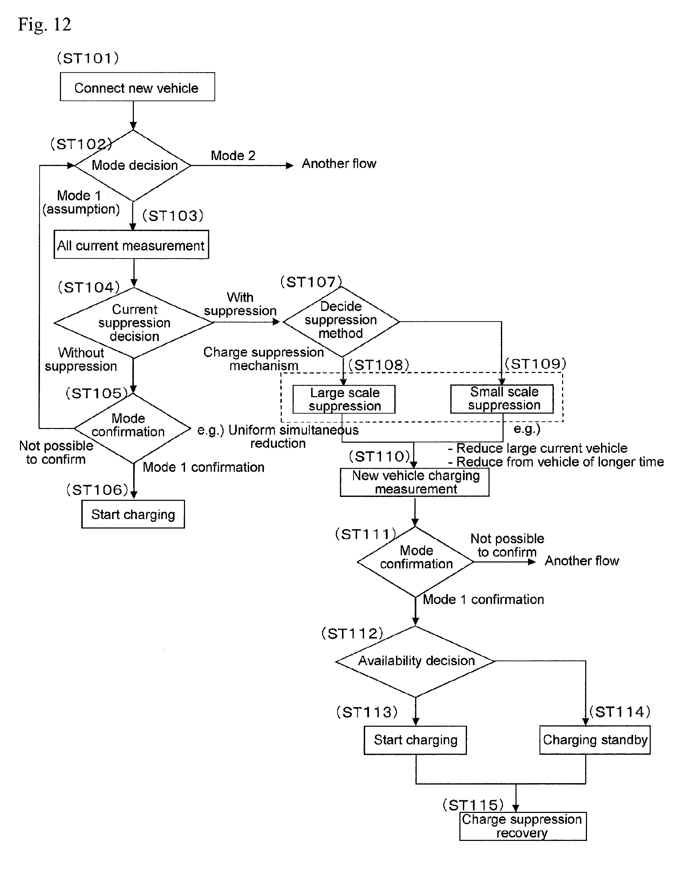

In the system illustrated in Fig. 11, descriptions are given below in accordance with the flows Figs. 12 through 14, to a case that the new vehicle 4c is newly connected to the vehicle charger 3c where the vehicles 4a and 4b are charged by the respective vehicle chargers 3a and 3b.

### (ST101, 102)

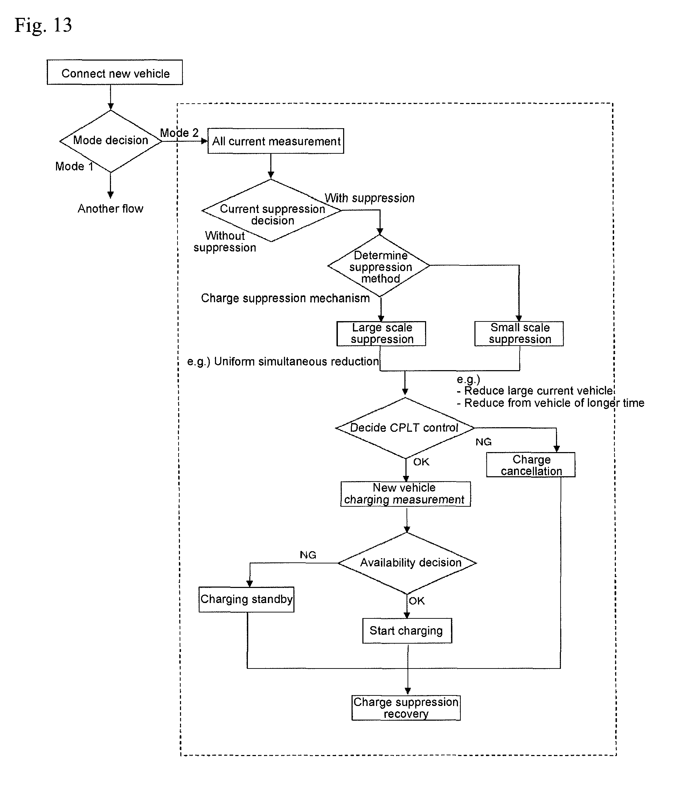

After the Mode 2 vehicle 4 is connected to the vehicle charger 3, the potential of the CPLT signal becomes 9 V as mentioned above, so that detection of the connection and the decision as the Mode 2 vehicle are carried out simultaneously and the process goes on to the next procedure (procedure surrounded by the broken line in Fig. 13). This is similar to the flow described in the second embodiment.

In contrast, regarding a Mode 1 vehicle, the potential of the CPLT signal does not change, so that it is not possible to simultaneously carry out detection of connect and decision as the Mode 1 vehicle. With that, a Mode 1 vehicle is assumed to be connected when the potential of the CPLT signal is 12 V and the closed circuit operation button BT of the vehicle charger 3 is pressed and the process goes on to the next procedure (ST103).

### (ST103)

In ST103, the charging current measured by the CT28 in each of the vehicle chargers 3a and 3b to which the already connected vehicles 4a and 4b are connected is referred to. The referred charging current data is transmitted to the control unit 10, and in the control unit 10, based on the charging current data, the total charging current B that is used for charging of the already connected vehicles 4a and 4b at the present time is calculated. The control unit 10 calculates a combined value of A and B as the full load current (A + B) referring to the general load current A supplied from the power board 1 to the general loads 6. Meanwhile, the control unit 10 retains the contract demand value C of the power board 1 and the tolerance F that is allowed to be continuously used within a range of the contract demand value C (in the present embodiment, a value defined in the interior wiring regulations, which are commercial standards in Japan, and a value calculated as "F = Contract Demand Value C × 80%"), and the allowable current value (F - (A + B)) that is available for power supply for the new vehicle 4c s calculated from the difference between them. Here, in the control unit 10, the assumed charging current value D, which is a maximum value of the charging current assumed to be necessary in charging the new vehicle 4c, is registered in advance.

### (ST104)

Subsequently, in the control unit 10, magnitudes of the allowable current value (F - (A + B)) and the assumed charging current value D are contrasted.

When the allowable current value is greater than the assumed charging current value D in ST104, charging is permitted to the new vehicle 4c without carrying out charging limitation to the already connected vehicles 4a and 4b.

### (ST105)

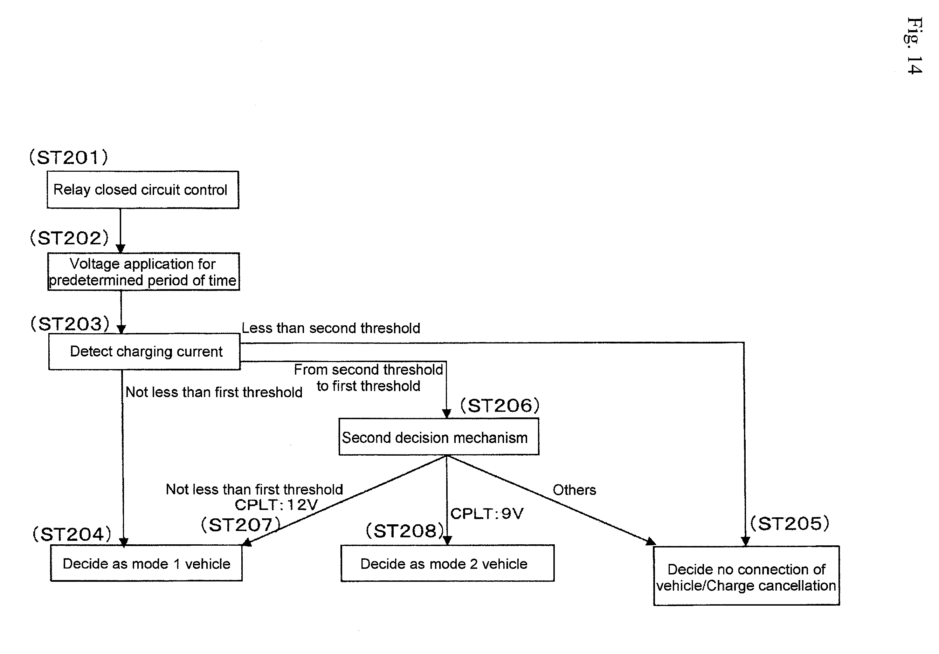

Subsequently, in accordance with the flow in Fig. 14, the type of vehicle is confirmed.

### (ST201)

Since the closed circuit operation button BT of the vehicle charger 3c is pressed, the relay 17 is subjected to closed circuit control by the general type vehicle charge control section on the assumption that a Mode 1 vehicle is connected. At this time, the CPLT signal is shifted to 0 V.

### (ST202, ST203)

Subsequently, by applying a 200 V voltage for a predetermined period of time (for one second), detection of the charging current that flows in the charging path 26 at this time is carried out.

### (ST204)

When the CPLT signal is in a state of 0 V and the charging current is not less than a threshold (for example, 1 A), the decision is made as a Mode 1 vehicle is connected and continues application of a voltage of 200 V to start charging (ST106).

### (ST205)

When the CPLT signal is in a state of 0 V and the charging current is less than the threshold, the voltage application is continued for a predetermined period of time (for example, for five minutes) by a confirmation mechanism. When the charging current becomes not less than the threshold within a predetermined period of time (ST206), the confirmation decision is made as a Mode 1 vehicle is connected (ST204) and the voltage of 200 V is continued to start charging (ST106).

### (ST207)

When the charging current is less than the threshold within the predetermined period of time, the procedure goes back to ST102 as not being possible to confirm. When the CPLT signal is shifted to 9 V within the predetermined period of time as well, the procedure goes back to ST102, so that the process goes on to the next procedure (procedure surrounded by the broken line in Fig. 13) as a Mode 2 vehicle.

When the allowable current value is less than the assumed charging current value D in ST104, the charging current is temporarily suppressed (reduced) to the already connected vehicles 4a and 4b.

### (ST107)

In the control unit 10, a method of charge suppression to all or part of the already connected vehicles 4a and 4b is determined by the allowable current value.

### (ST108)

When the allowable current value is not more than a predetermined value (for example, a case of (F - (A + B)) ≤ D/2), charge suppression is performed uniformly to all of the already connected vehicles 4a and 4b (for example, the charging current is limited to 50% of the rated value). After that, each charging current is referred again to confirm that the allowable current value is greater than the assumed charging current value D by charge suppression of the already connected vehicles 4a and 4b.

### (ST109)

When the allowable current value is more than the predetermined value (for example, a case of (F - (A + B)))>D/2), charge suppression is performed only to a particular vehicle (for example, to decrease the charging current of a vehicle with a greater charging current or a vehicle connected for a long period of time to 50% of the rated value) out of the already connected vehicles 4a and 4b. After that, each charging current measurement is referred to again to confirm that the allowable current value is greater than the assumed charging current value D by charge suppression of the already connected vehicles 4a and 4b.

### (ST110)

Subsequently, a voltage is temporarily applied for a predetermined period of time (for example, for one minute) by the new charging current measurement section and the actual charging current E that flows in the new vehicle 4c is measured.

### (ST111)

Next, in accordance with the flow in Fig. 14, the type of vehicle is confirmed.

### (ST201)

Since the closed circuit operation button BT of the vehicle charger is pressed, the relay 17 is subjected to closed circuit control by the general type vehicle charge control section 18 on the assumption that a Mode 1 vehicle is connected. At this time, the CPLT signal is shifted to 0 V.

### (ST202, ST203)

Subsequently, by applying a 200 V voltage for a predetermined period of time (for one second), detection of the charging current that flows in the charging path 26 at this time is carried out.

### (ST204)

When the CPLT signal is in a state of 0 V and the charging current is not less than a threshold (for example, 1 A), the decision is made as a Mode 1 vehicle is connected.

### (ST205)

When the CPLT signal is in a state of 0 V and the charging current is less than the threshold, the voltage application is continued for a predetermined period of time (for example, for five minutes) by a confirmation mechanism. When the charging current becomes not less than the threshold within a predetermined period of time (ST206), the confirmation decision is made as a Mode 1 vehicle is connected (ST204) and the voltage application of 200 V is continued to start charging (ST106).

### (ST207)

When the charging current is less than the threshold within the predetermined period of time, the procedure goes back to ST102 as not being possible to confirm.

When the CPLT signal is shifted to 9 V within the predetermined period of time as well, the procedure goes back to ST102, so that the process goes on to the next procedure (procedure surrounded by the broken line in Fig. 13) as a Mode 2 vehicle.

### (ST112)

When the decision is made as a Mode 1 vehicle is connected in ST111, subsequently the actual charging current E that flows in the new vehicle 4c and the allowable current value (F - (A + B)) are contrasted by the new vehicle charge availability decision section, and charging is permitted when the allowable current value is greater than the actual charging current E (ST113). When the allowable current value is less than the actual charging current E, a standby command for charging is given (ST114). The new vehicle 4c that receives the standby command for charging is permitted to be charged after completion of charging the already connected vehicles 4a and 4b.

When the charging is permitted, the charging is started.

### (ST115)

The charge suppression to the already connected vehicles 4a and 4b performed in ST108 or ST109 is released regardless of the decision result after the decision by the new vehicle charge availability decision section in ST112, and the charging current recovers to the original level.

### (Fourth Embodiment)

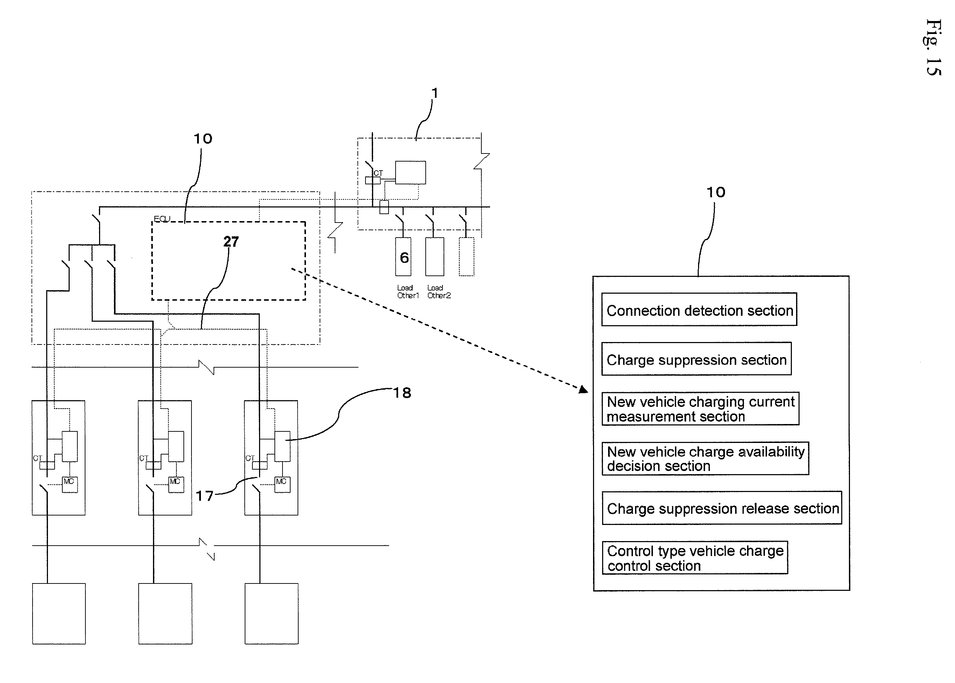

A vehicle charging system in the fourth embodiment is provided with, as illustrated in Fig. 15, the following sections (a connection detection section, a charge suppression section, a new vehicle charging current measurement section, a new vehicle charge availability decision section, a charge suppression release section, and a control type vehicle charge control section).

Although the connection detection section, the charge suppression section, the new vehicle charging current measurement section, the new vehicle charge availability decision section, the charge suppression release section, and the control type vehicle charge control section are similar to the second embodiment, they are different in that the charge suppression decision section is omitted.

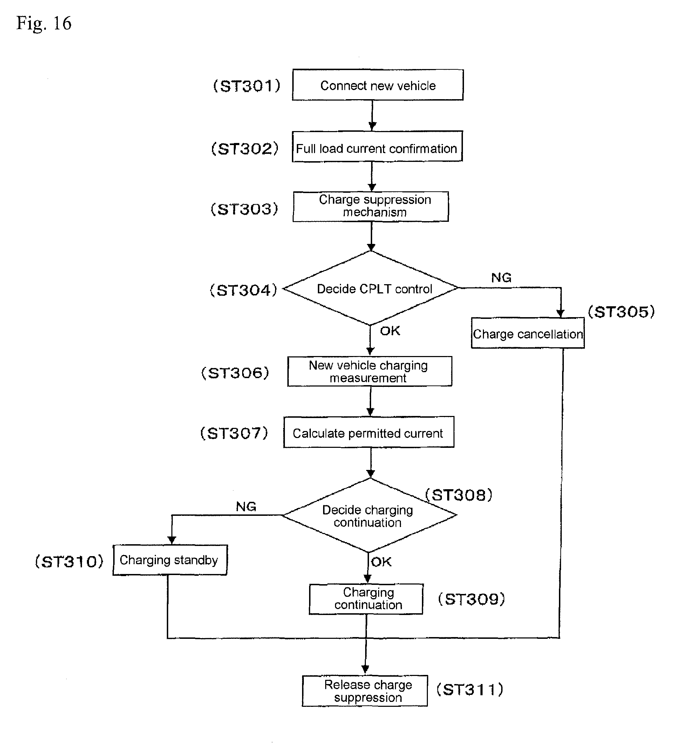

In the system illustrated in Fig. 15, descriptions are given below in accordance with the flow in Fig. 16, to a case that the new vehicle 4c is newly connected to the vehicle charger 3c where the vehicles 4a and 4b are charged by the respective vehicle chargers 3a and 3b.

### (ST301)

When the new vehicle 4c is connected to the vehicle charger 3c, the connection detection section equipped in the charge control section 18 of the vehicle charger 3c detects connection of a Mode 2 vehicle by the potential of the CPLT signal and transmits connection of the new vehicle 4c from the vehicle charger 3c to the control unit 10 by the communication section (signal line 27).

### (ST302)

When connection of the new vehicle 4c is detected, the control unit 10 refers to the charging current measured by the CT28 in each of the vehicle chargers 3a and 3b to which the already connected vehicles 4a and 4b are connected. That is, the charging current data of each of the vehicle chargers 3a and 3b is transmitted to the control unit 10, and in the control unit 10, based on the charging current data, the total charging current B that is used for charging of the already connected vehicles 4a and 4b at the present time is calculated. The control unit 10 calculates a combined value of A and B as the full load current (A + B) referring to the general load current A supplied from the power board 1 to the general loads 6. As the value of the full load current (A + B), the current value measured in the CT9 may also be used.

### (ST303)

Subsequently, the control unit 10 performs charge suppression to all or part of the already connected vehicles 4a and 4b without deciding necessity of the charge suppression. That is, the charge suppression section performs a suppression method that is registered in advance (for example, charge suppression uniformly to all vehicles, or charge suppression only to a particular vehicle).

### (ST304)

Subsequently, in the CPLT circuit of the vehicle charger 3c connected to the new vehicle 4c, a CPLT signal at a predetermined duty ratio as an initial value is oscillated to carry out confirmation of whether or not the new vehicle 4c is a vehicle qualified for charging with the vehicle charger 3c. Specifically, when a charging current not less than that corresponding to the duty ratio flows in the new vehicle 4c, charging is not permitted as an unqualified vehicle (ST305). To a qualified vehicle, charge control for a Mode 2 vehicle described above is carried out. The control may also be started at an original duty ratio by oscillating the CPLT signal at a value smaller than the original duty ratio and resetting the CPLT signal after availability decision regarding the qualified vehicle.

### (ST306)

To a qualified vehicle, charging is actually carried out by Mode 2 control by the control type vehicle charge control section. Simultaneously, a voltage is temporarily applied for a predetermined period of time (for example, for one minute) by the new vehicle charging current measurement section to measure the actual charging current E that flows in the new vehicle 4c.

### (ST307)

Meanwhile, the control unit 10 retains the contract demand value C of the power board 1 and the tolerance F that is allowed to be continuously used within a range of the contract demand value C (in the present embodiment, a value defined in the interior wiring regulations, which are commercial standards in Japan, and a value calculated as "F = Contract Demand Value C × 80%"), and the allowable current value (F - (A + B)) that is available for power supply for the new vehicle 4c is calculated from the difference from the full load current measured in ST302.

### (ST308)

Subsequently, the actual charging current E that flows in the new vehicle 4c and the allowable current value (F - (A + B)) are contrasted by the new vehicle charge availability decision section of the control unit 10, and charging of the new vehicle is performed when the allowable current value is greater than the actual charging current E (ST309).

When the allowable current value is less than the actual charging current E, a standby command for charging is given (ST310). The new vehicle 4c that receives the standby command for charging is permitted to be charged after completion of charging the already connected vehicles 4a and 4b. After the charging is permitted to carry out Mode 2 control, the charging is started.

### (ST311)

The charge suppression to the already connected vehicles 4a and 4b performed in ST302 is released regardless of the decision result after the decision by the new vehicle charge availability decision section in ST308, and the charging current recovers to the original level.

### (Fifth Embodiment)

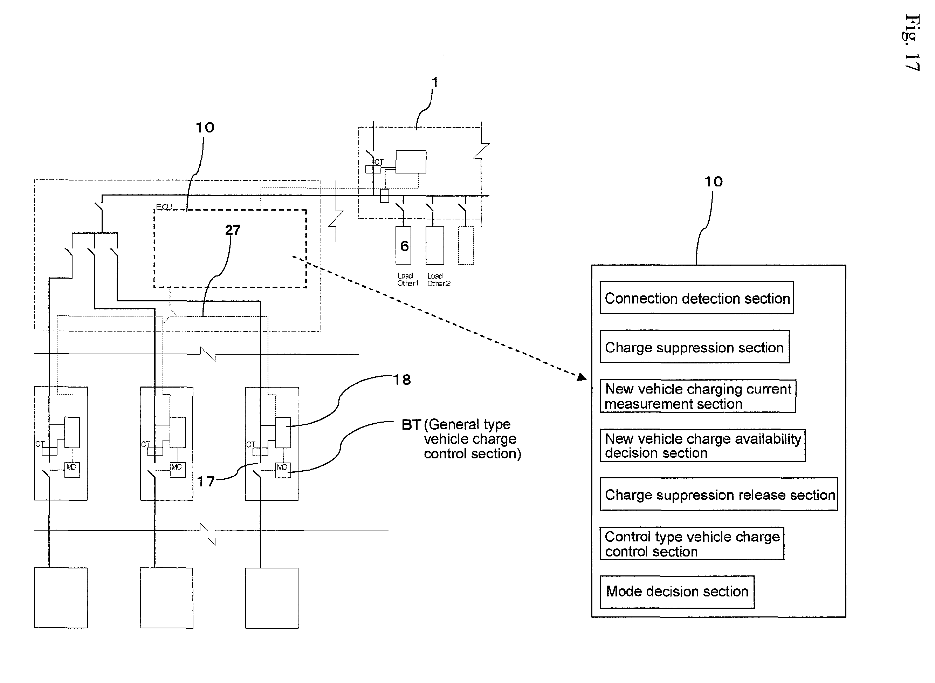

A vehicle charging system in the fifth embodiment is provided with, as illustrated in Fig. 17, the following sections (a connection detection section, a charge suppression section, a new vehicle charging current measurement section, a new vehicle charge availability decision section, a charge suppression release section, a control type vehicle charge control section, a general type vehicle charge control section, and a mode decision section).

The connection detection section, the charge suppression section, the new vehicle charging current measurement section, the new vehicle charge availability decision section, the charge suppression release section, and the control type vehicle charge control section are similar to the fourth embodiment described above. The general type vehicle charge control section and the mode decision section are similar to the third embodiment described above.

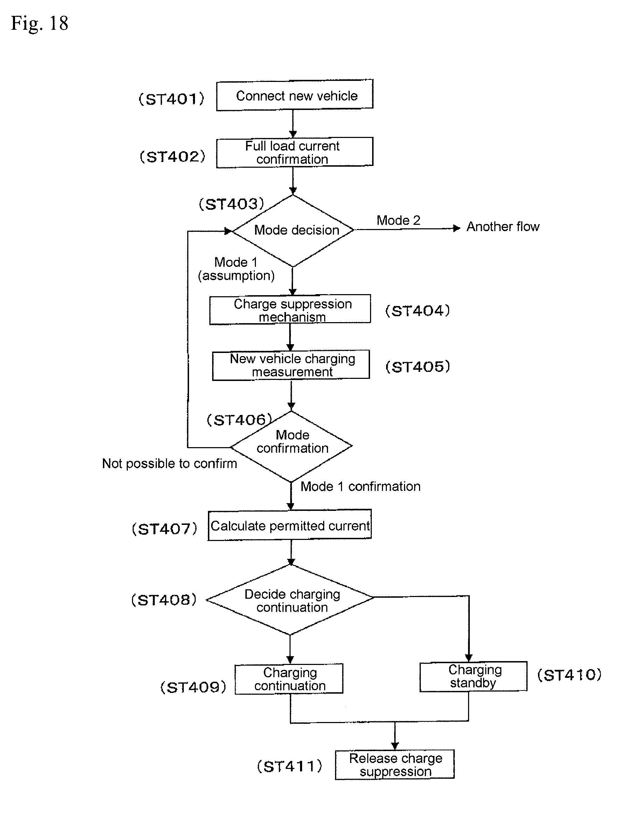

In the system illustrated in Fig. 17. descriptions are given below in accordance with the flows in Figs.18 through 19, to a case that the new vehicle 4c is newly connected to the vehicle charger 3c where the vehicles 4a and 4b are charged by the respective vehicle chargers 3a and 3b.

### (ST401)

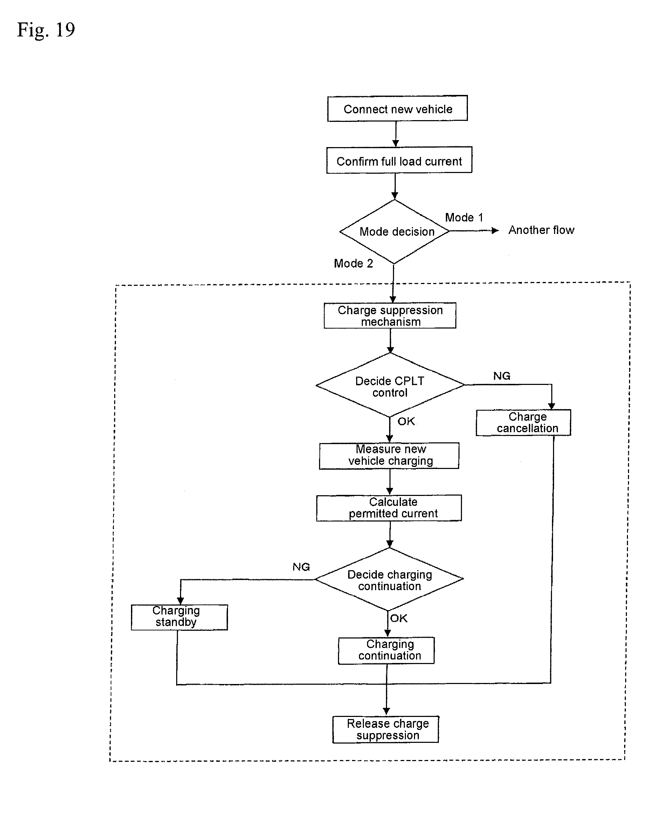

After the Mode 2 vehicle 4 is connected to the vehicle charger 3, the potential of the CPLT signal becomes 9 V as mentioned above, so that detection of the connection and the decision as the Mode 2 vehicle are carried out simultaneously (ST403) and the process goes on to the next procedure (procedure surrounded by the broken line in Fig. 19). This is similar to the flow described in the third embodiment.

In contrast, regarding a Mode 1 vehicle, the potential of the CPLT signal does not change, so that it is not possible to simultaneously carry out detection of connect and decision as the Mode 1 vehicle. With that, a Mode 1 vehicle is assumed to be connected when the potential of the CPLT signal is 12 V and the closed circuit operation button BT of the vehicle charger 3 is pressed (ST403) and the process goes on to the next procedure (ST402).

### (ST402)

When the connection of a Mode 2 vehicle is detected or the closed circuit operation button BT of the vehicle charger 3 is pressed at the potential of the CPLT signal of 12 V, the control unit 10 refers to the charging current measured by the CT28 in each of the vehicle chargers 3a and 3b to which the already connected vehicles 4a and 4b are connected. That is, the charging current data of each of the vehicle chargers 3a and 3b is transmitted to the control unit 10, and in the control unit 10, the total charging current B used for charging of the already connected vehicles 4a and 4b at the present time is calculated based on the charging current data. The control unit 10 calculates a combined value of A and B as the full load current (A + B) referring to the general load current A supplied from the power board 1 to the general loads 6. As the value of the full load current (A + B), the current value measured in the CT9 may also be used.

### (ST404)

Subsequently, the control unit 10 performs charge suppression to all or part of the already connected vehicles 4a and 4b without deciding necessity of the charge suppression. That is, the charge suppression section performs a suppression method that is registered in advance (for example, charge suppression uniformly to all vehicles, or charge suppression only to a particular vehicle).

### (ST405)

Subsequently, charging is actually carried out to the new vehicle 4c. A voltage is temporarily applied for a predetermined period of time (for example, for one minute) by the new charging current measurement section to measure the actual charging current E that flows in the new vehicle 4c.

### (ST406)

At the same time, confirmation of the type similar to the third embodiment is carried out. That is, when the charging current is not less than a threshold (for example, 1 A) in a state that the CPLT signal is 0 V for a predetermined period of time, a Mode 1 vehicle is confirmed to be connected. In a case other than that, the process goes back to ST403 as not being possible to confirm, and mode decision is carried out again. At this time, the charge suppression of the already connected vehicles 4a and 4b is released.

### (ST407)

Meanwhile, the control unit 10 retains the contract demand value C of the power board 1 and the tolerance F that is allowed to be continuously used within a range of the contract demand value C (in the present embodiment, a value defined in the interior wiring regulations, which are commercial standards in Japan, and a value calculated as "F = Contract Demand Value C × 80%"), and the allowable current value (F - (A + B)) that is available for power supply for the new vehicle 4c is calculated from the difference from the full load current measured in ST302.

### (ST408)

Subsequently, the actual charging current E that flows in the new vehicle 4c and the allowable current value (F - (A + B)) are contrasted by the new vehicle charge availability decision section of the control unit 10, and charging of the new vehicle 4c is performed when the allowable current value is greater than the actual charging current E (ST409). When the allowable current value is less than the actual charging current E, a standby command for charging is given (ST410). The new vehicle 4c that receives the standby command for charging is permitted to be charged after completion of charging the already connected vehicles 4a and 4b. After the charging is permitted to carry out Mode 2 control, the charging is started.

### (ST411)

The charge suppression to the already connected vehicles 4a and 4b performed in ST404 is released regardless of the decision result after the decision by the new vehicle charge availability decision section in ST408, and the charging current recovers to the original level.

### [Description of Reference Numerals]

- 1: Power Board
- 2: Charging Distribution Board
- 3 (3 a through 3c): Vehicle Charger
- 4 (4a through 4c): Vehicle
- 6: General Load
- 7: Main Bus Bar
- 8 a through 8d: Branch Line
- 9: CT
- 10: Control Unit
- 11: Signal Line
- 12: Master Breaker
- 14a through 14d: Power Supply Line
- 16: Decision Section
- 17: Relay
- 18: Charge Control Section
- 19: CT
- 20: CT
- 21: Charging Cable
- 22: On-Board Battery
- 23: Charge Control Circuit
- 25: Power Reception Permission Switch
- 26: Charging Path
- 27: Signal Line
- 28: CT

## Claims

1. A vehicle charging system provided with a control unit to control power supply for a plurality of vehicle chargers connected to a respective plurality of vehicles, the system comprising:
a connection detection section detecting connection of the vehicle;
a charge suppression section carrying out temporary charge suppression to an already connected vehicle in response to detection of a new vehicle by the connection detection section;
a new vehicle charging current measurement section carrying out measurement of a charging current that flows in the new vehicle by carrying out temporary test current application to the new vehicle after charge suppression of the already connected vehicle; and
a new vehicle charge availability decision section deciding availability of continuous charging to the new vehicle using the charging current value that flows in the new vehicle measured in the new vehicle charging current measurement section.

2. The vehicle charging system of claim 1, further comprising a charge suppression decision section deciding necessity of the charge suppression to the already connected vehicle prior to the temporary test current application to the new vehicle.

3. The vehicle charging system of claim 2, wherein the charge suppression decision section decides the necessity of the charge suppression to the already connected vehicle using a contract demand value of a power board.

4. The vehicle charging system of claim 2, wherein the charge suppression decision section decides the necessity of the charge suppression to the already connected vehicle using a tolerance defined at a value a lower than a contract demand value of a power board.

5. The vehicle charging system of claim 1, wherein the new vehicle charge availability decision section decides the availability of the continuous charging to the new vehicle using a tolerance defined at a value lower than a contract demand value of a power board.

6. The vehicle charging system of claim 2, wherein the new vehicle charge availability decision section decides the availability of the continuous charging to the new vehicle using a tolerance defined at a value lower than a contract demand value of a power board.

7. The vehicle charging system of claim 1, further comprising a charge suppression release section releasing the charge suppression to the already connected vehicle.

8. The vehicle charging system of claim 1, further comprising:
a control type vehicle charge control section carrying out charge control for a control type vehicle by potential of a charge control signal; a general type vehicle charge control section carrying out closed circuit control of a charging path by a pressing operation of a closed circuit operation button; anda mode decision section deciding a type of connected vehicle, wherein
the mode decision section carries out closed circuit control of the charging path on an assumption of connection of a general type vehicle in a case that a charge control signal when the closed circuit operation button is pressed indicates a predetermined voltage to confirm the type of the connected vehicle based on the charging current that flows in the charging path after circuit closing.
